# EUROPÄISCHE PATENTSCHRIFT

(11) **EP 3 598 885 B1**
(45) Veröffentlichungstag und Bekanntmachung des Hinweises auf die Patenterteilung: **28.02.2024**
(21) Anmeldenummer: 19172881.5
(22) Anmeldetag: 07.05.2019
(51) Int. Cl.: A01D 41/14, A01D 43/08, A01D 45/02

(54) **ANORDNUNG AUS EINEM VORSATZGERÄT UND EINER SELBSTFAHRENDEN ERNTEMASCHINE**
ASSEMBLY OF A HEADER AND A SELF-PROPELLED HARVESTING MACHINE
DISPOSITIF COMPRENANT UNE TÊTE DE RÉCOLTE ET D'UNE RÉCOLTEUSE AUTOMOTRICE

(30) Priorität: 27.07.2018 DE 102018118182; 17.04.2019 DE 102019110098
(43) Veröffentlichungstag der Anmeldung: 29.01.2020
(73) Patentinhaber: CLAAS Selbstfahrende Erntemaschinen GmbH, 33428 Harsewinkel (DE)
(72) Erfinder: Beschorn, Udo, 33428 Harsewinkel (DE); Wellensiek, Scott, 33428 Harsewinkel (DE); Megyeri, Tamás, 2740 Abony (HU)
(74) Vertreter: CLAAS Gruppe

(56) Entgegenhaltungen:
- EP-A1- 3 069 597
- DE-A1-102010 028 687
- DE-A1-102015 206 141
- US-A- 4 502 270
- US-A1- 2017 086 374

## Beschreibung

Die vorliegende Erfindung betrifft eine Anordnung aus einem Vorsatzgerät und einer selbstfahrenden Erntemaschine, wobei das Vorsatzgerät zum Ernten von Erntegut vorgesehen ist und einen Mittenbereich, in dem es abnehmbar an einem Einzugskanal der selbstfahrenden Erntemaschine angeordnet ist, sowie benachbart zum Mittenbereich angeordnete Seitenbereiche aufweist, die jeweils eine sich im Wesentlichen in horizontaler Richtung erstreckende Bodenfläche und eine sich im Wesentlichen in vertikaler Richtung erstreckende Rückwand aufweisen. Die vorliegende Erfindung betrifft weiterhin eine selbstfahrende Erntemaschine mit einem Vorsatzgerät für eine solche Anordnung.

Um das Arbeitsfeld vor einer selbstfahrenden Erntemaschine bei schlechten Sichtverhältnissen, vor allem bei starker Staubentwicklung, oder nachts ausreichend zu beleuchten, weisen Erntemaschinen in der Regel einen oder mehrere Arbeitsscheinwerfer auf, mit denen das Erntegut vor der Erntemaschine angestrahlt werden kann. Solche Arbeitsscheinwerfer sind zumeist am Kabinendach sowie einem Bodensegment einer Fahrerkabine oder an Spiegelträgern angeordnet.

Um einen ausreichend guten Blick auf den Arbeitsbereich zu ermöglichen, offenbart beispielsweise die Druckschrift WO 2011/032612 eine Sämaschine mit an Rahmenteilen angeordneten Leuchtmitteln, die zur Beleuchtung der Bodenbearbeitungswerkzeuge vorgesehen sind. Die Leuchtmittel sind so angeordnet, dass der bearbeitete Bodenbereich ausgeleuchtet wird, und der Bereich oberhalb des Rahmens dabei durch Rahmenelemente abgeschirmt ist. Dadurch kann sich der Blick des Fahrers auf den ausgeleuchteten Arbeitsbereich fokussieren.

Die Druckschrift US 4,502,270 offenbart ein Vorsatzgerät für einen Mähdrescher, an dem eine Vielzahl Halmteiler angeordnet sind. Damit die Halmteiler auch in der Dämmerungszeit noch einfach zwischen den Erntegutreihen geführt werden können, weisen die Halmteiler transparente Fenster auf, hinter denen Leuchtmittel angeordnet sind, die einerseits das abzuerntende Erntegut beleuchten und durch die andererseits die Spitze des Halmteilers für den Fahrer leichter erkennbar sein soll. Die Druckschrift US2017086374A1 offenbart Leuchtmittel die entlang des Gehäuses des Vorsatzgeräts angeordnet sind.

Ein Ausleuchten eines Vorsatzgerätes, das insbesondere zum Ernten von Erntegut vorgesehen ist, ist bei immer größer werdenden Arbeitsbreiten mit den Beleuchtungseinrichtungen der Erntemaschine nicht über die gesamte Erntebreite möglich.

Kommt es bei einer Erntefahrt, wenn auch nur vorübergehend, zu einer starken Staubbelastung, sei es aufgrund der trockenen Wetterverhältnisse oder durch beim Ernten vom Erntegut selbst verursachten Staub, führt dies bei Verwendung der bisher bekannten Beleuchtungsmittel, sei es der Erntemaschine oder des Vorsatzgerätes, zu einer starken Sichtbeeinträchtigung für den Fahrer, da dieser dann gegen eine helle Staubwand schaut bzw. im Fall der in den Halmteilern angeordneten die Leuchtmittel diese nicht sehen kann. Dadurch kann die zur Beurteilung der Gutflussqualität erforderliche Sicht auf und in das Vorsatzgerät und/oder auf das bearbeitete Erntegut sogar verloren gehen.

Aufgabe der vorliegenden Erfindung ist es daher, die Beleuchtung einer Anordnung aus einem zum Ernten von Erntegut vorgesehenen Vorsatzgerät und einer selbstfahrenden Erntemaschine, an der das Vorsatzgerät angeordnet ist, und/oder die Beleuchtung des Vorsatzgerätes so zu verbessern, dass sie auch unter schwierigen und/oder wechselnden Sichtverhältnissen, insbesondere bei einer starken Staubbelastung, eine für die Beurteilung der Gutflussqualität ausreichende Sicht auf einen vor dem Vorsatzgerät liegenden Bereich mit abzuerntendem Erntegut, in das Vorsatzgerät und/oder auf das bearbeitete Feld ermöglicht.

Die Aufgabe wird gelöst mit einer Anordnung umfassend ein Vorsatzgerät und seine selbstfahrende Erntemaschine mit den Merkmalen des unabhängigen Patentanspruchs 1.

Dafür wird eine Anordnung aus einem Vorsatzgerät und einer selbstfahrenden Erntemaschine vorgeschlagen, wobei das Vorsatzgerät zum Ernten von Erntegut vorgesehen ist und einen Mittenbereich aufweist, an dem es abnehmbar an einem Einzugskanal der selbstfahrenden Erntemaschine angeordnet ist, sowie benachbart zum Mittenbereich angeordnete Seitenbereiche aufweist, die jeweils eine sich im Wesentlichen in horizontaler Richtung erstreckende Bodenfläche und eine sich im Wesentlichen in vertikaler Richtung erstreckende Rückwand aufweisen. Die Anordnung zeichnet sich dadurch aus, dass an dem Vorsatzgerät oberhalb der jeweiligen Bodenfläche und unterhalb der Oberkante der Rückwand Beleuchtungsmittel zum Beleuchten des Erntegutes während der Erntefahrt angeordnet sind, deren Lichtkegel in Fahrtrichtung gerichtet sind, um über die Vorderkante der Bodenfläche hinaus einen Bereich vor dem Vorsatzgerät auszuleuchten. Insbesondere können die Beleuchtungsmittel über die Vorderkante der Bodenfläche hinaus einen Bereich vor dem Vorsatzgerät auszuleuchten, insbesondere unterhalb einer sich im Erntebetrieb ausbildenden Staubzone. Durch die Anordnung von Beleuchtungsmittel an der in Fahrrichtung gewandten Seite der Rückwand wird das Vorfeld vor dem Vorsatzgerät unterhalb einer Staubzone ausgeleuchtet, die sich insbesondere hinter dem Mittenbereich des Vorsatzgerätes oberhalb des Einzugskanals ausbilden kann. Ein Vorteil der Erfindung besteht somit darin, dass damit die Beleuchtung unter schwierigen Erntebedingungen, wie beispielsweise bei der Ausbildung der Staubzone oberhalb des Einzugskanals, deutlich flexibler und blendfreier ist. Dadurch wird der Effekt, dass eine Bedienperson der Erntemaschine, die sich in einer oberhalb des Einzugskanals angeordneten Fahrerkabine befindet, bei starker Staubbelastung gegen eine helle Wand aus Staub blickt, vermieden. Die Sicht auf das Vorsatzgerät, insbesondere dessen Bodenfläche, zur Beurteilung der Gutflussqualität als auch einem Bereich vor dem Vorsatzgerät zur Beurteilung des Zustands des aufzunehmenden Erntegutes bleibt auch unter schwierigen Bedingungen gewährleistet. In Erntesituationen mit hoher Staubbildung befinden sich diese Beleuchtungsmittel unterhalb der Staubzuone und bieten somit eine störungsfreie Ausleuchtung des Vorsatzgerätes und des Bereichs vor dem Vorsatzgerät.

Erfindungsgemäß sind die Beleuchtungsmittel in die Rückwand integriert oder an der Rückwand des jeweiligen Seitenbereiches des Vorsatzgerätes angeordnet. Die Integration der Beleuchtungsmittel in die Rückwand des jeweiligen Seitenbereiches des Vorsatzgerätes ist besonders vorteilhat, da es auf diese Weise in geringerem Maße mechanischen Belastungen durch aufgenommenes Erntegut ausgesetzt ist. Zudem wird durch diese Anordnung der Beleuchtungsmittel die Ausleuchtung des Vorsatzgerätes über dessen gesamte Breite sichergestellt, was durch die an der Erntemaschine angeordnete Arbeitsbeleuchtung alleine aufgrund der zunehmenden Arbeitsbreite der Vorsatzgeräte nicht immer gewährleistet ist. Vorzugsweise sind die Beleuchtungsmittel der Gutflussbeleuchtung so in die Rückwand oberhalb der Bodenfläche des Vorsatzgerätes integriert, dass sie den Gutfluss nicht behindern. Dafür ist eine dem abgeernteten Erntegut zugewandte Außenfläche der Beleuchtungsmittel glatt und/ oder bündig mit einer Außenfläche der Rückwand, an der das Erntegut entlang gleitet, ausgebildet. Das Erntegut kann daher auch entlang der Beleuchtungsmittel der Gutflussbeleuchtung gleiten, ohne von diesen behindert oder sogar abgebremst zu werden.

Erfindungsgemäß sind die Beleuchtungsmittel mit einem Abstand zur Bodenfläche angeordnet, wobei der Abstand geringer als 0,8 m, insbesondere geringer als 0,4 m, ist. Diese oberhalb der Bodenfläche angeordneten Beleuchtungsmittel sind als zumindest ein Paar, vorzugsweise als mehrere Paare, vom Typ Gutflussbeleuchtung ausgeführt. Die Beleuchtungsmittel vom Typ Gutflussbeleuchtung sollen während der Erntefahrt aufgewirbelten Staub unterleuchten, so dass die Bedienperson trotz aufgewirbeltem Staub während der Erntefahrt bei eingeschalteten Beleuchtungsmitteln vom Typ Gutflussbeleuchtung nicht gegen eine weiße Wand schaut und sie die Gutflussqualität daher beurteilen kann. Zudem beleuchten diese Beleuchtungsmittel die Vorderkante und/oder das abgeerntete, im Vorsatzgerät transportierte Erntegut. Um den gegebenenfalls entstehenden Staub zu unterleuchten, ist es daher bevorzugt, dass die Beleuchtungsmittel vom Typ Gutflussbeleuchtung einen möglichst geringen Abstand zu der Bodenfläche der Seitenbereiche des Vorsatzgerätes, auf der das Erntegut zum Mittenbereich hin transportiert wird, aufweisen, nämlich geringer als 0,8 m, insbesondere geringer als 0,4 m. Vorzugsweise werden als Beleuchtungsmittel vom Typ Gutflussbeleuchtung Beleuchtungsmittel genutzt, deren Abstrahlwinkel kleiner als 90° ist, insbesondere 30 - 45°. Dadurch kann eine Blendung des Bedieners der Erntemaschine, beispielsweise durch eine drehende Haspel eines als Getreideschneidwerk ausgeführten Vorsatzgerätes, vermieden werden.

Weiterhin kann an dem Vorsatzgerät jeweils ein weiteres Beleuchtungsmittel an gegenüberliegenden Enden der Seitenbereiche angeordnet sein, wobei zur Ausrichtung eines Lichtkegels des jeweiligen Beleuchtungsmittels eine sensorische Erfassung einer Bestandskante durch eine Sensoreinrichtung vorgesehen ist, wobei anhand der erfassten Bestandkante die Ausrichtung des jeweiligen Beleuchtungsmittels erfolgt. Bevorzugt ist vorgesehen, den Lichtkegel nur desjenigen Beleuchtungsmittels anhand der Bestandskante auszurichten, welches auf dem der Bestandskante zugewandten Seitenbereich des Vorsatzgerätes angeordnet ist. Die Ausleuchtung der Bestandskante durch das weitere Beleuchtungsmittel an dem Vorsatzgerät bietet dem Fahrer eines Transportfahrzeugs, welches das Erntefahrzeug in der begleitet und im Wesentlichen parallel zu diesem geführt wird, eine Orientierungshilfe.

Vorzugsweise können auf der der Erntemaschine zugewandten Seite der Rückwand an der Rückwand oder in die Rückwand integriert zumindest zwei Beleuchtungsmittel angeordnet sein, deren Lichtkegel entgegen der Fahrtrichtung auf einen hinter dem Vorsatzgerät liegenden Bereich ausgerichtet ist. Die zumindest zwei Beleuchtungsmittel können vom Typ Stoppelbeleuchtung sein und beleuchten daher das in Fahrtrichtung gesehen hinter dem Vorsatzgerät abgeerntete Feld. Mit ihnen kann die Bedienperson der selbstfahrenden Erntemaschine daher die abgeernteten Stoppeln des Erntegutes sehen. Die zumindest zwei Beleuchtungsmittel vom Typ Stoppelbeleuchtung können ebenfalls an jeweils einem äußeren Ende des Vorsatzgerätes angeordnet sein.

Bevorzugt können die an dem Vorsatzgerät angeordneten Beleuchtungsmittel, insbesondere funktionsweise, gemeinsam, separat und/oder paarweise, fernschaltbar, und/oder an einem zentralen Ort des Vorsatzgerätes oder der selbstfahrenden Erntemaschine gemeinsam ausschaltbar sein. Dabei ist ein zentraler Ort des Vorsatzgerätes im Sinne dieser Erfindung nicht am Beleuchtungsmittel selbst angeordnet. Bevorzugt ist der zentrale Ort außerhalb einer Fahrerkabine der selbstfahrenden Erntemaschine angeordnet.

Die Beleuchtungsmittel des Vorsatzgerätes ergänzen die an der selbstfahrenden Erntemaschine angeordnete Arbeitsbeleuchtung und verbessern schon deshalb die während der Erntefahrt vorhandenen Möglichkeiten der Beleuchtung des Erntegutes. Durch die direkte Beleuchtung am Vorsatzgerät ist der Beleuchtungsweg verringert, eine genauere Fokussierung auf relevante Bereiche möglich und die Sicht auf das Erntegut verbessert. Insgesamt ist die Beurteilung des Erntevorganges sowie des Gutflusses schon deshalb besser möglich.

Die Fernschaltbarkeit des Beleuchtungsmittels ermöglicht ein Schalten des Beleuchtungsmittels von einem entfernten Ort aus, insbesondere von einer Fahrerkabine der selbstfahrenden Erntemaschine aus. Dadurch ist das Schalten des mindestens einen Beleuchtungsmittels für den Bediener auch während der Erntefahrt bedarfsweise möglich und die Beleuchtung des Erntegutes daher an die Sichtverhältnisse, insbesondere bei einer erhöhten Staubbelastung, flexibel anpassbar.

Bevorzugt können die jeweiligen am Vorsatzgerät angeordneten Beleuchtungsmittel als mindestens ein Paar desselben Typs ausgeführt sein, dessen Beleuchtungsmittel an den einander gegenüberliegenden Seitenbereichen des Vorsatzgerätes angeordnet sind, wobei die Beleuchtungsmittel des jeweiligen Paares fernschaltbar, und/oder an dem zentralen Ort des Vorsatzgerätes oder der selbstfahrenden Erntemaschine gemeinsam ausschaltbar sind. Vorzugsweise sind die Beleuchtungsmittel des jeweiligen Paares etwa symmetrisch zum Mittenbereich angeordnet. Dadurch lässt sich ein symmetrisches Beleuchtungsfeld erzielen. Daher ist es besonders bevorzugt, dass die Beleuchtungsmittel des Paares funktionsweise, gemeinsam und/oder paarweise fernschaltbar sind. Die Beleuchtungsmittel des Paares können aber, insbesondere in Abhängigkeit vom Typ, d.h. dem Anwendungsbereich als Stoppelbeleuchtung, Gutflussbeleuchtung sowie Bestandskantenbeleuchtung, der Beleuchtungsmittel, auch separat ausschaltbar sein.

In einer bevorzugten Ausführungsform weist die Anordnung einen Schalter mit zumindest zwei Schaltstellungen umfasst, welche der Auswahl von zumindest zwei Beleuchtungsmodi dienen. Dabei kann die Anordnung des Schalters an dem zentralen Ort vorgesehen sein. Der Schalter kann als herkömmlicher elektrischer Schalter, und daher kostengünstig, ausgebildet sein. Besonders bevorzugt ist er für den Bediener leicht zugänglich am Vorsatzgerät oder an der selbstfahrenden Erntemaschine angeordnet. Dadurch ist die Bedienung zur Auswahl der zumindest zwei Beleuchtungsmodi für die Bedienperson komfortabel möglich. Bei einer Anordnung des Schalters an der selbstfahrenden Erntemaschine erfolgt diese insbesondere außerhalb der Erntemaschine und nahe dem Einstieg in die Fahrerkabine. Vorzugsweise ist der Schalter in einem für den Bediener leicht zugänglichen Bereich angeordnet.

Dabei kann in einer ersten Schaltstellung der Betrieb der Beleuchtungsmittel in einem ersten Betriebsmodus erfolgen, in welchem die Beleuchtungsmittel mittels einer zentralen Steuerungseinheit ferngeschaltet individuell aus- und einschaltbar sind. Die zentrale Steuerungseinheit ermöglicht das voneinander unabhängige Schalten der Beleuchtungsmittel. Die erste Schaltstellung ermöglicht so größtmögliche Flexibilität beim Ein- und Ausschalten der Beleuchtungsmittel des Vorsatzgerätes. Dadurch ist die Beleuchtung des Erntegutes während einer Erntefahrt so anpassbar, dass sie für den Bediener, auch bei schwierigen Sichtverhältnissen, insbesondere einer starken Staubbelastung, blendfrei ist. Ebenfalls bevorzugt erfolgt die Fernschaltung innerhalb einer Fahrerkabine der selbstfahrenden Erntemaschine.

Weiterhin kann in einer zweiten Schaltstellung der Betrieb der Beleuchtungsmittel in einem zweiten Betriebsmodus erfolgen, in welchem die Beleuchtungsmittel am Vorsatzgerät ausgeschaltet sind. Durch das Schalten in den zweiten Betriebsmodus können alle Beleuchtungsmittel des Vorsatzgerätes in der zweiten Schaltstellung gemeinsam ausgeschaltet werden.

Des Weiteren kann in einer dritten Schaltstellung der Betrieb der Beleuchtungsmittel in einem dritten Betriebsmodus erfolgen, in der die Beleuchtungsmittel am Vorsatzgerät eingeschaltet sind. Durch das gemeinsame Einschalten aller an dem Vorsatzgerät angeordneten Beleuchtungsmittel lässt sich der Komfort für die Bedienperson, insbesondere bei Wartungs-, Montage- und/oder Kontrolltätigkeiten auf dem Feld erhöhen.

Hierbei kann die zentrale Steuerungseinheit eine Steuerungseinheit der selbstfahrenden Erntemaschine oder des Vorsatzgerätes sein. Besonders bevorzugt ist die zentrale Steuerungseinheit eine Steuerungseinheit der selbstfahrenden Erntemaschine. Zusätzlich oder alternativ ist es weiterhin bevorzugt, dass die zentrale Steuerungseinheit eine mobile Steuerungseinheit ist, beispielsweise ein, insbesondere mit einer entsprechenden Steuerungssoftware ausgestattetes, Smartphone, Tablet oder Notebook.

Dadurch ist ein Schalten der Beleuchtungsmittel von einem beliebigen entfernten Ort aus möglich.

Gemäß einer bevorzugten Weiterbildung kann die selbstfahrende Erntemaschine eine verschwenkbare Überladevorrichtung aufweisen, und die zentrale Steuerungseinheit dazu eingerichtet sein, dasjenige Beleuchtungsmittel automatisch beim Verschwenken der Überladevorrichtung temporär zu deaktivieren, welches auf der Seite der ausgeschwenkten Überladevorrichtung an dem Vorsatzgerät angeordnet ist Um beim Abtanken des Erntegutes den Fahrer eines Transportfahrzeugs, das sich üblicherweise neben oder vor dem der Ausleuchtung der Bestandskante dienenden Beleuchtungsmittel befindet, wobei sich der Fahrer rückwärtig orientiert, nicht zu blenden, wird dieses automatisch deaktiviert, sobald die Überladevorrichtung ausgeschwenkt wird. Nach dem Einschwenken der Überladevorrichtung zum Abschluss des Überladevorgangs wird das Beleuchtungsmittel automatisch wieder aktiviert. Alternativ oder zusätzlich ist es bevorzugt, dass die der Ausleuchtung der Bestandskanten dienenden Beleuchtungsmittel paarweise schaltbar sind.

Insbesondere kann die selbstfahrende Erntemaschine eine Fahrerkabine aufweisen, in der zumindest eine Bedieneinheit zum gemeinsamen, separaten und/oder paarweisen Ein- und Ausschalten zumindest eines Teils der oder aller Beleuchtungsmittel des Vorsatzgerätes vorgesehen sein. Die Bedieneinheit wirkt mit der Steuerungseinheit zusammen, und ermöglicht das Schalten der Beleuchtungsmittel.

Dazu kann die zumindest eine Bedieneinheit als ein Kabinenschalter und/oder ein Bedienpanel ausgeführt sein. Dabei können der Kabinenschalter und/oder das Bedienpanel zum Ein- und/oder Ausschalten zumindest eines Teils der oder aller Beleuchtungsmittel des Vorsatzgerätes vorgesehen sein. In dieser Ausführungsform sind der Kabinenschalter sowie das Bedienpanel Teil der Bedieneinheit für die Bedienperson der Erntemaschine. Der Kabinenschalter ist dabei bevorzugt als Lenkstockschalter ausgebildet. Herkömmlich wird der Lenkstockschalter als Fahrtrichtungsanzeiger genutzt. In der erfindungsgemäßen Anordnung ist es aber bevorzugt, dass er zusätzlich zum Ein- und Ausschalten von einigen oder allen Beleuchtungsmitteln des Vorsatzgerätes vorgesehen ist, insbesondere zum Ein- und Ausschalten zumindest der Bestandskantenbeleuchtung.

Ein solches Bedienpanel kann zum Ein- und Ausschalten von Beleuchtungsmitteln der selbstfahrenden Erntemaschine vorgesehen sein, beispielsweise einer am Kabinendach angeordneten Rundumleuchte, einer Rückfahrleuchte, einer Hinterradbeleuchtung, eines Fernlichtes und weiterer Beleuchtungsmittel der selbstfahrenden Erntemaschine. In der erfindungsgemäßen Anordnung ist es aber bevorzugt, dass es ausschließlich oder zusätzlich zum Ein- und Ausschalten von einigen oder allen Beleuchtungsmitteln des Vorsatzgerätes vorgesehen ist, insbesondere zum Ein- und Ausschalten zumindest der Beleuchtungsmittel vom Typ Stoppelbeleuchtung und/oder Beleuchtungsmittel, die oberhalb der Bodenfläche des Vorsatzgerätes angeordnet sind und unter anderem der Gutflussbeleuchtung dienen.

In einer bevorzugten Ausführungsform kann das Ein- oder Ausschalten eines oder mehrerer Beleuchtungsmittel des Vorsatzgerätes vom Schaltzustand, insbesondere vom eingeschalteten oder ausgeschalteten Zustand, eines oder mehrerer Beleuchtungsmittel der selbstfahrenden Erntemaschine abhängig sein. In einer weiteren bevorzugten Ausführungsform sind mittels des Kabinenschalters und/oder des Bedienpanels ein oder mehrere Beleuchtungsmittel des Vorsatzgerätes gemeinsam mit einem oder mehreren Beleuchtungsmitteln der selbstfahrenden Erntemaschine ein- oder ausschaltbar. Dabei ist die Steuerungseinheit dazu ausgebildet, diejenigen oder dasjenige Beleuchtungsmittel des Vorsatzgerätes und/oder der selbstfahrenden Erntemaschine ein- oder auszuschalten, die oder das der Bediener am Lenkstockschalter oder am Bedienpanel angewählt hat.

Die Beleuchtungsmittel sind dafür bevorzugt kabelgebunden und/oder kabellos miteinander verbunden. Besonders bevorzugt sind sich über ein Bussystem miteinander vernetzt. Die Vernetzung erfolgt dabei vorzugsweise über einen Fahrzeugbus wie beispielsweise CAN-Bus oder LIN- Bus. Dabei wird bevorzugt ein ohnehin in der landwirtschaftlichen Erntemaschine genutzter Fahrzeugbus verwendet. Es ist aber auch eine Verbindung oder Vernetzung über eine Datenfernübertragungsschnittstelle wie beispielsweise eine Bluetooth- oder eine WLAN- Schnittstelle bevorzugt.

Bei einem als Bandschneidwerk, als sogenannter Draper, ausgeführten Vorsatzgerät, dass zum Transportieren des abgeernteten Erntegutes zum Mittenbereich zumindest zwei an gegenüberliegenden Seiten des Mittenbereiches angeordnete, gegenläufige Förderbänder aufweist, ist der Abstand der Beleuchtungsmittel der Gutflussbeleuchtung bevorzugt geringer als 0,8 m zu der durch die Förderbänder gebildeten Bodenfläche, besonders bevorzugt geringer als 0,4 m.

Dabei ist es besonders bevorzugt, dass ein Beleuchtungswinkel und/oder ein Fokus der Beleuchtungsmittel der Gutflussbeleuchtung, insbesondere automatisch mittels der Steuerungseinheit, oder manuell einstellbar vorgesehen sind. Dadurch kann die Bedienperson vor oder sogar während der Erntefahrt den Beleuchtungskegel der Beleuchtungsmittel der Gutflussbeleuchtung bedarfsweise, insbesondere für jedes Beleuchtungsmittel separat, verstellen. Dadurch ist ein Beleuchtungskegel der Beleuchtungsmittel jeweils beispielsweise auf einen Messerbalken an der Vorderkante und/oder auf das im Vorsatzgerät transportierte Erntegut ausgerichtet. Bei einem als Schneidwerk mit Querförderschnecken ausgeführten Vorsatzgerät können durch Einstellen der Beleuchtungswinkel und/oder Fokussieren der Beleuchtungskegel Reflexionen des Lichtes der Beleuchtungsmittel an der Einzugsschneckenwalze, die die Sicht für die Bedienperson behindern, vermieden werden.

Dafür ist es bevorzugt, dass die Beleuchtungsmittel der Gutflussbeleuchtung separat schaltbar sind. Es ist aber ebenfalls ein paarweises Schalten der Beleuchtungsmittel der Gutflussbeleuchtung bevorzugt. Zudem können die Beleuchtungswinkel der Beleuchtungsmittel der Gutflussbeleuchtung separat und/oder paarweise einstellbar vorgesehen sein.

Um den Energiebedarf gering zu halten, sind die Beleuchtungsmittel bevorzugt als eine oder als ein Feld von mehreren Leuchtdioden ausgebildet. Für die Gutflussbeleuchtung kann auch ein Leuchtband vorgesehen sein, insbesondere unterhalb oder oberhalb eines Abstreifers. Prinzipiell können aber auch Glühbirnen, Scheinwerfer, insbesondere für die Bestandskantenbeleuchtung und/oder die Stoppelbeleuchtung, oder andere herkömmliche Leuchtmittel verwendet werden.

Weiterhin wird ein Vorsatzgerät mit einer erfindungsgemäßen Anordnung nach einem der Ansprüche 1 bis 13 vorgeschlagen. Das Vorsatzgerät ist zum Ernten von Erntegut vorgesehen. Es weist einen Mittenbereich auf, an dem es abnehmbar an einem Einzugskanal einer selbstfahrenden Erntemaschine angeordnet ist. Am Vorsatzgerät ist mindestens ein Beleuchtungsmittel angeordnet. Das Beleuchtungsmittel kann vom Typ
- Bestandskantenbeleuchtung,
- Stoppelbeleuchtung, oder
- Gutflussbeleuchtung sein.

Das Beleuchtungsmittel ist erfindungsgemäß fernschaltbar, und/oder an einem zentralen Ort des Vorsatzgerätes oder der selbstfahrenden Erntemaschine ausschaltbar. In einer bevorzugten Ausführungsform ist es zudem an dem entfernten Ort einschaltbar.

Dadurch ergänzt das Beleuchtungsmittel die an der selbstfahrenden Erntemaschine angeordneten, als Arbeitsbeleuchtung ausgeführten Beleuchtungsmittel. Mit den am Vorsatzgerät angerordneten Beleuchtungsmitteln ist eine direkte Beleuchtung möglich, die den Beleuchtungsweg verringert, so dass eine genauere Fokussierung auf relevante Bereiche möglich ist. Die Sicht auf das Erntegut kann dadurch verbessert werden, so dass die Beurteilung des Erntevorganges sowie des Gutflusses für den Bediener leichter möglich ist. Durch die Fernschaltung ist zudem ein flexibles Ein- und Ausschalten des Beleuchtungsmittels des Vorsatzgerätes während der Erntefahrt, beispielsweise von der Fahrerkabine aus, möglich.

In einer bevorzugten Ausführungsform ist das Vorsatzgerät als ein Schneidwerk mit Querförderschnecken ausgeführt und weist eine Einzugsschneckenwalze zum Transport des abgeernteten Erntegutes auf.

In einer weiteren bevorzugten Ausführungsform weist das Vorsatzgerät zumindest ein Paar Beleuchtungsmittel vom Typ Gutflussbeleuchtung auf. Das Vorsatzgerät dieser Ausführungsform ist bevorzugt als ein Bandschneidwerk ausgeführt und weist daher Förderbänder zum Transport des abgeernteten Erntegutes auf. Die Förderbänder bilden eine Bodenfläche des Vorsatzgerätes, wobei die Beleuchtungsmittel oberhalb der Bodenfläche angeordnet sind. Gemäß der Erfindung ist ein Abstand der Beleuchtungsmittel der Gutflussbeleuchtung zu einer durch die Förderbänder gebildeten Bodenfläche geringer als 0,8 m, besonders bevorzugt geringer als 0,4 m.

Dadurch ist die Gutflussbeleuchtung so angeordnet, dass sie während der Erntefahrt aufgewirbelten Staub unterleuchtet, so dass der Bediener bei eingeschalteten Beleuchtungsmitteln der Gutflussbeleuchtung nicht gegen eine weiße Wand schaut und den Erntevorgang sowie den Gutfluss trotz des aufgewirbelten Staubs beurteilen kann.

Die Erfindung wird im Folgenden anhand von Figuren erläutert. Die Figuren sind lediglich beispielhaft und schränken den allgemeinen Erfindungsgedanken nicht ein. Es zeigen:
- Fig. 1: eine erfindungsgemäße Anordnung aus einer selbstfahrenden Erntemaschine und einem an dieser angeordneten Vorsatzgerät;
- Fig. 2: einen Schalter, der in einer ersten Schaltstellung ein Fernschalten und in einer zweiten Schaltstellung ein Ausschalten von Beleuchtungsmitteln eines Vorsatzgerätes einer erfindungsgemäßen Anordnung ermöglicht;
- Fig. 3: in Ansicht (a) ein in einer Fahrerkabine einer selbstfahrenden Erntemaschine einer erfindungsgemäßen Anordnung angeordnetes Bedienpanel, und in Ansicht (b) einen in der Fahrerkabine angeordneten Kabinenschalter; und
- Fig. 4: in Ansicht (a) einen Ausschnitt aus einer Vorderseite eines Vorsatzgerätes einer erfindungsgemäßen Anordnung, und in Ansicht (b) einen Ausschnitt aus einer Rückseite des in (a) gezeigten Vorsatzgerätes.

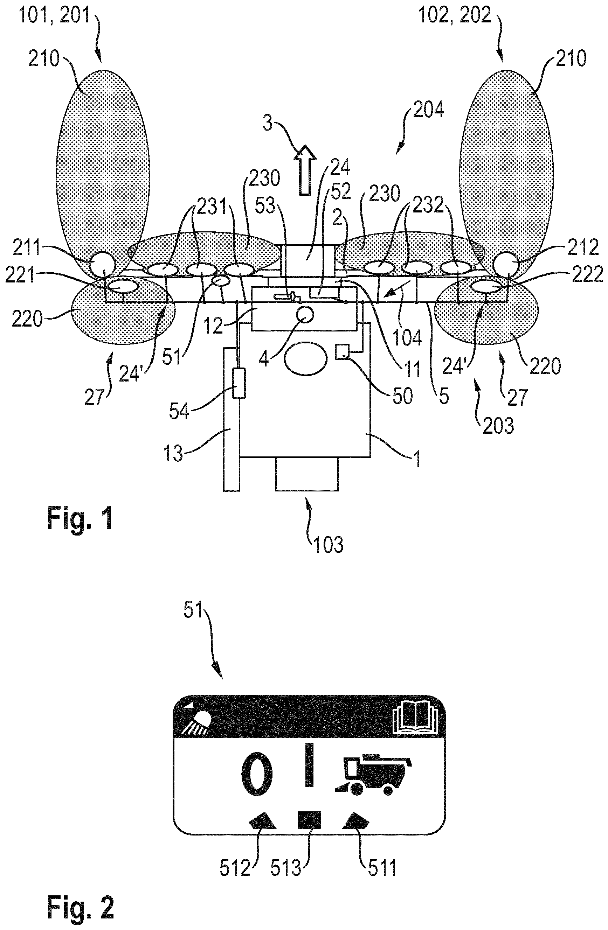

Figur 1 zeigt eine erfindungsgemäße Anordnung aus einer selbstfahrenden Erntemaschine 1 und einem an dieser angeordneten Vorsatzgerät 2. Die selbstfahrende Erntemaschine 1 ist ein Mähdrescher oder ein Feldhäcksler. Sie weist an einer Frontseite 104 einen Einzugskanal 11 auf, durch den Erntegut nachgeordneten Verarbeitungsaggregaten (nicht gezeigt) der selbstfahrenden Erntemaschine 1 zugeführt wird. An einer Heckseite 103 der selbstfahrenden Erntemaschine 1 können Nichtkornbestandteile des bearbeiteten Erntegutes auf das abgeerntete Feld abgelegt werden. Zum Abtanken der Kornbestandteile weist die selbstfahrende Erntemaschine 1 eine als schwenkbares Abtankrohr ausgeführte Überladevorrichtung 13 auf, welches an einer Seite 101, 102, hier an der in eine Fahrtrichtung 3 gesehen linken Seite 101, der Erntemaschine 1 angeordnet ist.

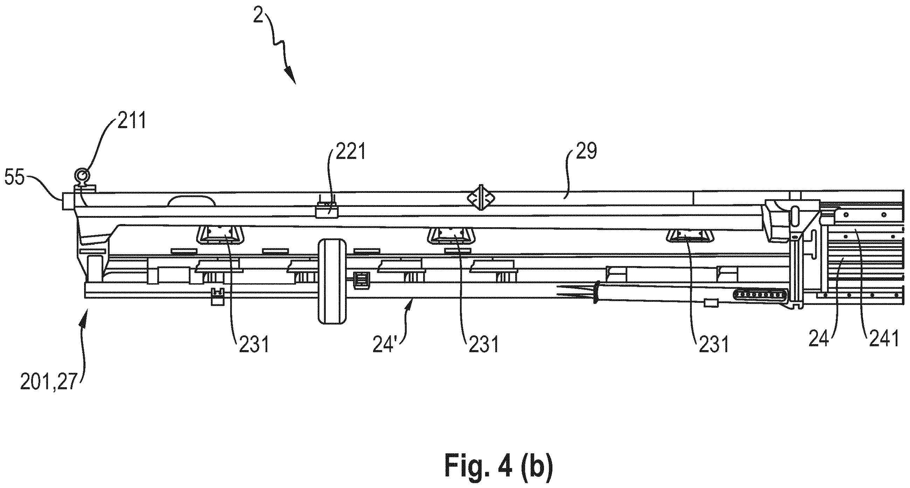

Das Vorsatzgerät 2 ist zum Ernten von Erntegut vorgesehen. Dafür weist es Schneidwerkzeuge 25 (s. Fig. 4 (b)) auf, mit denen das Erntegut während der Erntefahrt abgeschnitten wird. Beispielsweise sind die Schneidwerkzeuge bei einem als Schneidwerk ausgeführten Vorsatzgerät 2 als ein Messerbalken mit oszillierend angetriebene Messern ausgeführt. Das abgeschnittene Erntegut fällt dann auf eine Bodenfläche 26 (s. Fig. 4 (b)) des Vorsatzgerätes 2, von der oder über die es anschließend zu einem Mittenbereich 24 des Vorsatzgerätes 2 transportiert wird. Benachbart zum Mittenbereich 24 sind Seitenbereiche 24` angeordnet, die jeweils eine sich im Wesentlichen in horizontaler Richtung erstreckende Bodenfläche 26 aufweisen.

Im Mittenbereich 24 wird das Erntegut, insbesondere durch eine Durchlassöffnung 241 (s. Fig. 4 (b)), in die selbstfahrende Erntemaschine 1 gefördert. Dafür ist das Vorsatzgerät 2 mit seinem Mittenbereich 24 an dem Einzugskanal 11 der selbstfahrenden Erntemaschine 1 befestigt.

Um die selbstfahrende Erntemaschine 1 auf der Straße fahren zu können, ist das Vorsatzgerät 2 vom Einzugskanal 11 abnehmbar.

An einer Frontseite 104 weist die selbstfahrende Erntemaschine 1 eine Fahrerkabine 12 auf, in der eine Benutzerschnittstelle bzw. Bedieneinheit 56 angeordnet ist, die Eingabemittel 52, 53 sowie Ausgabemittel (nicht gezeigt) umfasst und zum Bedienen der selbstfahrenden Erntemaschine 1 sowie des Vorsatzgerätes 2 vorgesehen ist.

Am Vorsatzgerät 2 sind eine Vielzahl Beleuchtungsmittel 211, 212, 221, 222, 231, 232 angeordnet. Die Beleuchtungsmittel 211, 212, 221, 222, 231, 232 sind vom Typ Bestandskantenbeleuchtung 211, 212, Stoppelbeleuchtung 221, 222 und Gutflussbeleuchtung 231, 232. Das Vorsatzgerät 2 ist hier bezüglich der Anordnung der jeweiligen Beleuchtungsmittel 211, 212, 221, 222, 231, 232 symmetrisch zum Mittenbereich 24 ausgebildet.

Daher weist das Vorsatzgerät 2 als Bestandskantenbeleuchtung zumindest ein Paar Beleuchtungsmittel 211, 212 auf, die an gegenüberliegenden äußeren Enden 27 des Vorsatzgerätes 2 angeordnet sind. Die Beleuchtungsmittel 211, 212 der Bestandskantenbeleuchtung sind an der dem Erntegut zugewandten Seite des Vorsatzgerätes 2, das ist die in Fahrtrichtung 3 vordere Seite, angeordnet und zum Beleuchten eines, insbesondere noch nicht abgeernteten, Vorfeldes des Vorsatzgerätes 2 während der Erntefahrt vorgesehen. Mit ihnen ist jeweils eine Bestandskante (nicht dargestellt) des Erntegutes ausleuchtbar. Zur Verdeutlichung des mit diesem zumindest einen Paar Beleuchtungsmitteln 211, 212 beleuchteten Bereiches ist ein Bestandskantenbeleuchtungskegel 210 für jedes der beiden Beleuchtungsmittel 211, 212 der Bestandskantenbeleuchtung dargestellt.

Zudem ist am Vorsatzgerät 2 zumindest ein Paar Beleuchtungsmittel 221, 222 vom Typ Stoppelbeleuchtung angeordnet. Die zumindest zwei Beleuchtungsmittel 221, 222 vom Typ Stoppelbeleuchtung sind an der vom Erntegut abgewandten Seite des Vorsatzgerätes 2, das ist in Fahrtrichtung 3 gesehen die Rückseite des Vorsatzgerätes 2, angeordnet. Sie beleuchten daher das in Fahrtrichtung 3 gesehen hinter dem Vorsatzgerät 2 abgeerntete Feld. Jeweils eines der Beleuchtungsmittel 221, 222 der Stoppelbeleuchtung ist hier an einem der gegenüberliegenden äußeren Enden 27 des Vorsatzgerätes 2 an dessen Rückwand 29 angeordnet. Zur Verdeutlichung des mit diesem zumindest einen Paar Beleuchtungsmitteln 221, 222 beleuchteten Bereiches ist ein Stoppelbeleuchtungskegel 220 für jedes der beiden Beleuchtungsmittel 221, 222 der Stoppelbeleuchtung dargestellt.

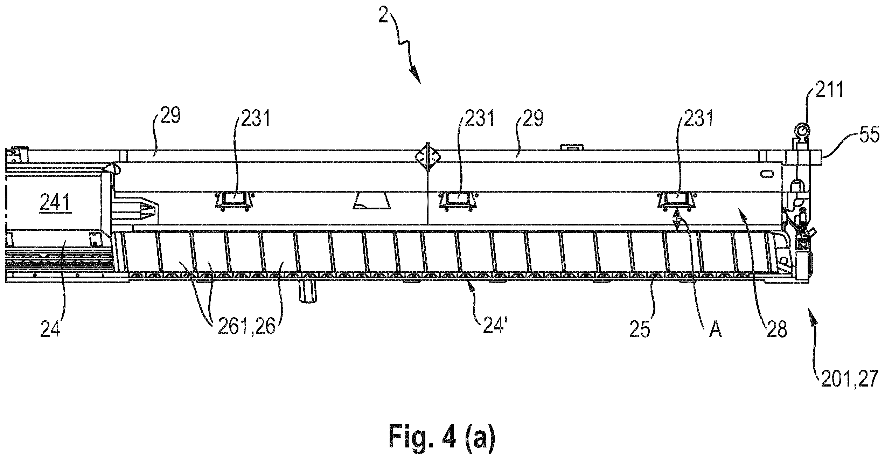

Weiterhin weist das Vorsatzgerät 2 mehrere, nämlich hier drei, Paare Beleuchtungsmittel 231, 232 vom Typ Gutflussbeleuchtung auf. Diese Beleuchtungsmittel 231, 232 sind zum Beleuchten des Erntegutes und/oder der Schneidwerkzeuge 25 des Vorsatzgerätes 2 vorgesehen. Dafür sind die Beleuchtungsmittel 231, 232 vom Typ Gutflussbeleuchtung an der dem Erntegut zugewandten Seite des Vorsatzgerätes 2 angeordnet. Sie sind an einer Rückwand 29 (s. Fig. 4 (a) und Fig. 4(b)) oberhalb einer Schneidwerksmulde 28 (s. Fig. 4 (b)) entlang der Seitenbereiche 24` des Vorsatzgerätes 2 verteilt angeordnet. Erfindungsgemäß sind die Beleuchtungsmittel 231, 232 in die Rückwand 29 integriert. Die Beleuchtungsmittel 231, 232 vom Typ Gutflussbeleuchtung sollen während der Erntefahrt aufgewirbelten Staub unterleuchten, so dass der Bediener 4 trotz aufgewirbeltem Staub während der Erntefahrt bei eingeschalteten Beleuchtungsmitteln 231, 232 zur Gutflussbeleuchtung nicht gegen eine weiße Wand schaut und die Gutflussqualität daher beurteilen kann. Zur Verdeutlichung der mit diesen drei Paaren Beleuchtungsmitteln 231, 232 beleuchteten Bereiche ist ein Gutflussbeleuchtungskegel für jedes der Beleuchtungsmittel 231, 232 dargestellt.

Die Beleuchtungsmittel 211, 221, 231, 212, 222, 232 des Vorsatzgerätes 2 sind hier fernschaltbar, und/oder an einem zentralen Ort ausschaltbar. Der zentrale Ort ist hier am Vorsatzgerät 2 angeordnet. Der zentrale Ort ist nicht an einem der Beleuchtungsmittel 211, 212, 221, 222, 231, 232 selbst angeordnet. Der zentrale Ort ist durch einen Schalter 51 (s. Fig. 2) gebildet, der zumindest zwei Schaltstellungen aufweist, welchen jeweils ein Betriebsmodus zugeordnet ist. Die erste der beiden Schaltstellungen 511 (s. Fig. 2) einen ersten Betriebsmodus darstellt, der das Fernschalten der Beleuchtungsmittel 211, 221, 231, 212, 222, 232 ermöglicht, und die zweite der beiden Schaltstellungen 512 (s. Fig. 2) einen zweiten Betriebsmodus, der das gemeinsame Ausschalten der Beleuchtungsmittel 211, 221, 231, 212, 222, 232 ermöglicht.

Der Schalter 51 und die Beleuchtungsmittel 211, 221, 231, 212, 222, 232 sind dafür miteinander vernetzt. Beispielhaft ist hier ein kabelgebundenes Netzwerk 5 dargestellt. Es ist aber auch eine kabellose Vernetzung oder eine Kombination aus einer kabelgebundenen und einer kabellosen Vernetzung möglich.

Das Fernschalten wird mittels einer Steuerungseinheit 50 der selbstfahrenden Erntemaschine 1, die dafür an das Netzwerk 5 angebunden ist, gesteuert. Zum Fernschalten kann aber auch eine Steuerungseinheit (nicht gezeigt) des Vorsatzgerätes 2 dienen. Dabei ist die Steuerungseinheit 50 dazu eingerichtet, eines der oder mehrere Beleuchtungsmittel 211, 221, 231, 212, 222, 232 des Vorsatzgerätes 2 ein- oder auszuschalten, wenn sie ein Schaltsignal vom Bediener 4, einem Sensor 54 der Erntemaschine oder einer Sensoreinrichtung 55 des Vorsatzgerätes 2 empfängt. Dafür weist die selbstfahrende Erntemaschine 1 hier in der Fahrerkabine 12 die Benutzerschnittstelle auf. Als Eingabemittel zum Ein- und Ausschalten der Beleuchtungsmittel 211, 221, 231, 212, 222, 232 weist die Benutzerschnittstelle bzw. Bedieneinheit 56 einen Kabinenschalter 53 auf, der als Lenkstockschalter ausgebildet ist, sowie ein Bedienpanel 52. Der Lenkstockschalter 53 wird auch als Fahrtrichtungsanzeiger genutzt. Das Bedienpanel 52 ist auch zum Ein- und Ausschalten der Beleuchtungsmittel (nicht gezeigt) der selbstfahrenden Erntemaschine 1 vorgesehen.

Die Beleuchtungsmittel 221, 222 der Stoppelbeleuchtung sind zudem separat schaltbar, wenn die Überladevorrichtung 13 der selbstfahrenden Erntemaschine 1 auf einer Seite 201, 202 der selbstfahrenden Erntemaschine 1 ausgeschwenkt ist. Das Ausschwenken der Überladevorrichtung 13 wird von dem Sensor 54 erfasst. Die Steuerungseinheit 50 ist dann dazu eingerichtet, dasjenige Beleuchtungsmittel 221, 222 der Stoppelbeleuchtung auszuschalten, welches auf derselben Seite 101, 201, 102, 202 angeordnet ist, auf der die Überladevorrichtung 13 ausgeschwenkt ist. Dadurch wird der Bediener 4 bei ausgeschwenkter Überladevorrichtung 13 nicht durch dieses Beleuchtungsmittels 221, 222 geblendet.

Fig. 2 zeigt eine Ausführungsform des am Vorsatzgerät 2 angeordneten Schalters 51. In der gezeigten Ausführungsform ermöglicht dieser Schalter 51 nicht nur in der ersten Schaltstellung 511 das Fernschalten der Beleuchtungsmittel 211, 221, 231, 212, 222, 232, und in der zweiten Schaltstellung 512 das gemeinsame Ausschalten der Beleuchtungsmittel 211, 221, 231, 212, 222, 232. Sondern dieser Schalter 51 weist zudem eine dritte Schaltstellung 513, die einen dritten Betriebsmodus darstellt, auf, in der der Schalter 51 das gemeinsame Einschalten der Beleuchtungsmittel 211, 221, 231, 212, 222, 232 ermöglicht.

Da mit dem Schalter 51 entweder das gemeinsame Ausschalten oder das gemeinsame Einschalten oder das Fernschalten der Beleuchtungsmittel 211, 221, 231, 212, 222, 232 des Vorsatzgerätes 2 möglich ist, ermöglicht dieser eine Vorauswahl. Dieser Schalter 51 wird daher auch als Vorwahlschalter 51 bezeichnet.

Sofern der Vorwahlschalter 51 am Vorsatzgerät 2 angeordnet ist, ist er unabhängig von der Ausführungsform der selbstfahrenden Erntemaschine 1. Wenn das Vorsatzgerät 2 an einer selbstfahrenden Erntemaschine 1 angeordnet ist, die keine Fernbedienung der Beleuchtungsmittel 211, 221, 231, 212, 222, 232 ermöglicht, ermöglicht der Vorwahlschalter 51 dennoch das Ausschalten und je nach Ausführungsform des Vorwahlschalters 51 gegebenenfalls das Einschalten der Beleuchtungsmittel 211, 221, 231, 212, 222, 232 des Vorsatzgerätes 2 an dem durch den Vorwahlschalter 51 festgelegten zentralen Ort. Die erste Schaltstellung 511 des Vorwahlschalters 51 wird dann lediglich nicht genutzt.

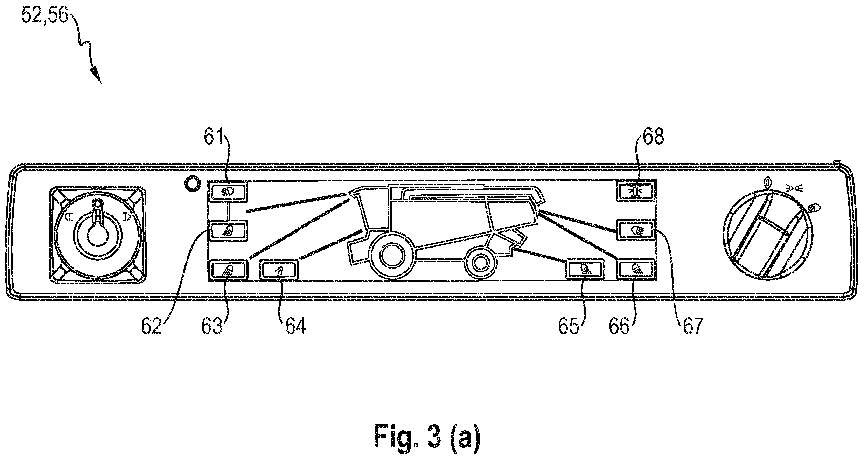

Fig. 3 (a) zeigt beispielhaft ein in der Fahrerkabine 12 angeordnetes Bedienpanel 52. Das Bedienpanel 52 weist Bedientasten 61 - 68 zum Ein- und Ausschalten von Beleuchtungsmitteln der selbstfahrenden Erntemaschine 1 sowie Beleuchtungsmitteln 211, 212, 231, 232 des Vorsatzgerätes 2 auf. Dabei sind Bedientasten für eine Rundumleuchte 68, eine Rückfahrleuchte 66, 67, eine rückwärtigen Feldbeleuchtung 65, ein Fernlicht 61, 62 und eine Vorfeldbeleuchtung 63 der selbstfahrenden Erntemaschine 1, sowie eine Bedientaste 64 zum Ein- und Ausschalten der Beleuchtungsmittel 211, 212, 231, 232 der Gutflussbeleuchtung sowie der Bestandskantenbeleuchtung des Vorsatzgerätes 2 am Bedienpanel 52 angeordnet. Die Bedientasten 61 - 68 sind hier als Taster ausgebildet und werden zum Einschalten sowie zum Ausschalten jeweils betätigt. Zur Detektion einer Bestandskante sind an dem Vorsatzgerät 2 an den äußeren Enden der Seitenabschnitte 24` die Sensoreinrichtungen 55 angeordnet.

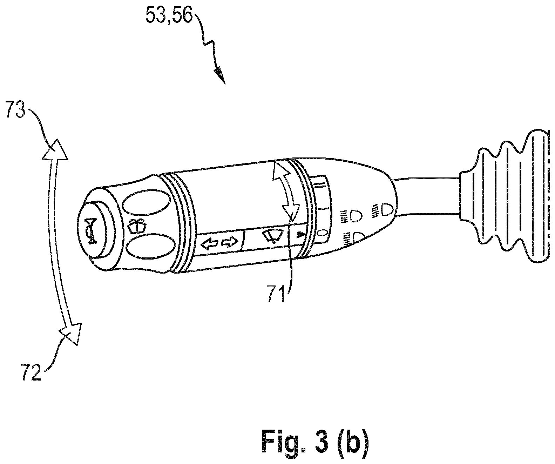

Fig. 3 (b) zeigt den in der Fahrerkabine 12 angeordneten Lenkstockschalter 53. Durch Drehen eines Drehschalters 71 am Lenkstockschalter 53 kann hier ein Scheibenwischer (nicht gezeigt) einer Frontscheibe (nicht gezeigt) betätigt werden. Die auf- und ab Bewegung 72, 73 des Lenkstockschalters 53 betätigt im Straßenbetrieb die Blinker der Erntemaschine. Im Erntebetrieb werden damit zusätzlich oder alternativ eine Seitenbeleuchtung der Erntemaschine und/oder eine Bestandskantenbeleuchtung des Vorsatzgerätes betätigt.

In Bezug auf das Bedienpanel 52 und den Lenkstockschalter 53 können die Bedientaster 61 - 68, der Drehschalter 71 und/oder die auf- und ab Bewegung 72, 73 des Lenkstockschalters 53 auch andere Beleuchtungsmittel des Vorsatzgerätes 2 und/oder der selbstfahrenden Erntemaschine 1 schalten. Zudem kann auch ein separates Ein- und Ausschalten eines Beleuchtungsmittels 211, 221, 231, 212, 222, 232 eines Paares Beleuchtungsmittel 211, 221, 231, 212, 222, 232 des Vorsatzgerätes 2 vorgesehen sein, oder ein kombiniertes Schalten von mehreren Beleuchtungsmitteln der selbstfahrenden Erntemaschine 1 und/oder des Vorsatzgerätes 2. Außerdem können dafür auch weitere Schalter oder Taster an Bedienpanelen (nicht gezeigt), Lenkstockschaltern (nicht gezeigt) oder anderen Eingabemitteln (nicht gezeigt) vorgesehen sein.

Die Fig. 4 (a) zeigt einen Ausschnitt aus einer Frontseite 204 eines Vorsatzgerätes 2 einer erfindungsgemäßen Anordnung, und die Fig. 4 (b) einen Ausschnitt aus der Rückseite 203 des in Fig. 4 (a) gezeigten Vorsatzgerätes 2.

Das Vorsatzgerät 2 ist im Wesentlichen symmetrisch zu einer den Mittenbereich 24 halbierenden Mittelebene (nicht gezeigt) angeordnet. Im Mittenbereich 24 wird das Vorsatzgerät 2 an den Einzugskanal 11 der selbstfahrenden Erntemaschine 1 befestigt. Im Mittenbereich 24 ist eine Durchlassöffnung 241 vorgesehen, durch die während der Erntefahrt das geerntete Erntegut in den Einzugskanal 11 der selbstfahrenden Erntemaschine 1 gefördert wird. Zum Ernten des Erntegutes weist das Vorsatzgerät 2 Schneidwerkzeuge 25, hier in Form eines Messerbalkens, die frontseitig des Vorsatzgerätes 2 angeordnet ist, auf.

Das hier dargestellte Vorsatzgerät 2 ist ein Bandschneidwerk 2, ein sogenannter Draper. Bei einem solchen als Bandschneidwerk ausgeführten Vorsatzgerät 2 ist zum Fördern des Erntegutes an jeder Seite 201, 202 des Vorsatzgerätes 2 jeweils ein Förderband 261 vorgesehen, wobei die beiden Förderbänder 261 in gegenläufige Richtung angetrieben werden. Die Förderbänder 261 bilden eine Bodenfläche 26 im jeweiligen Seitenbereich 24' des Vorsatzgerätes 2, auf der das Erntegut abgelegt und transportiert wird. Durch den gegenläufigen Antrieb der Förderbänder 261 wird das Erntegut in den Mittenbereich 24 gefördert. Im Mittenbereich 24 können zudem eine Förderschnecke (nicht gezeigt) und/oder ein Förderband (nicht gezeigt) angeordnet sein, die das Erntegut in den Durchlasskanal 241 transportieren.

Die Erfindung ist aber nicht auf ein als Bandschneidwerk ausgeführtes Vorsatzgerät 2 beschränkt, sondern betrifft auch ein als Schneidwerk mit Querförderschnecken ausgeführtes Vorsatzgerät 2 (nicht gezeigt), das zum Transportieren des Erntegutes Förderschnecken (nicht gezeigt) aufweist, die sich über die gesamte Länge des jeweiligen Seitenbereiches 24' des Vorsatzgerätes erstrecken und beidseitig des Vorsatzgerätes gegenläufige Schneckenwindungen aufweist.

Um die Ausmessungen des Vorsatzgerätes 2 auch bei schlechten Witterungsverhältnissen oder nachts erkennen und zudem die Bestandskante (nicht gezeigt) ausleuchten zu können, weist das Vorsatzgerät 2 eine Bestandskantenbeleuchtung auf. Die Bestandskantenbeleuchtung ist hier aus zwei Beleuchtungsmitteln 211, 212 gebildet, die an gegenüberliegenden äußeren Enden 27 des Vorsatzgerätes 2 angeordnet und dafür vorgesehen sind, das Vorfeld des Vorsatzgerätes 2 zu beleuchten. Zur Ansteuerung der Beleuchtungsmitteln 211, 212 werden Signale der Sensoreinrichtungen 55 von der Steuerungseinheit 50 ausgewertet.

Aufgrund der Symmetrie des Vorsatzgerätes 2 kann an beiden Seiten 201, 202 des Vorsatzgerätes 2 etwa dieselbe Menge Erntegut geerntet und auf die Bodenfläche 26 aufgenommen werden.

Damit der Bediener 4 die Schneidkante der Schneidwerkzeuge 25 und/oder den Gutfluss während der Erntefahrt beobachten kann, weist das Vorsatzgerät 2 zudem eine Gutflussbeleuchtung auf, die hier aus an den gegenüberliegenden Seiten 201, 202 des Vorsatzgerätes 2 in den Seitenbereichen 24` angeordneten jeweils drei Beleuchtungsmitteln 231, 232 gebildet ist. Um den beim Ernten und/oder aufgrund trockener Witterungsverhältnisse entstehenden Staub zu unterleuchten, sind die Beleuchtungsmittel 231, 232 zur Gutflussbeleuchtung möglichst nahe der durch die Förderbänder 261 gebildeten Bodenfläche 26 des Vorsatzgerätes 2 angeordnet. Sie sind hier an der Rückwand 29, die gemeinsam mit den Förderbändern 261 eine Schneidwerksmulde bildet, angeordnet. Weiterhin weisen sie hier einen Abstand A von weniger als 0,8 m, vorzugsweise weniger als 0,4 m, zu den Förderbändern 261 auf.

In der dargestellten Ausführungsform sind die Beleuchtungsmittel 231, 232 der Gutflussbeleuchtung als Leuchtdiodenfeld ausgebildet und um eine sich parallel der Rückwand 29 erstreckende Drehachse (nicht gezeigt) drehbar, so dass ein Beleuchtungswinkel (nicht gezeigt) verstellbar ist, in dem der Leuchtkegel 230 der Beleuchtungsmittel 231, 232 auf die Förderbänder 261 und/oder die Schneidwerkzeuge 25 trifft. Die Beleuchtungsmittel 231, 232 der Gutflussbeleuchtung können aber auch in einem festen Beleuchtungswinkel und/oder eben mit der Rückwand 29 in diese eingebaut sein.

Weiterhin ist hier eine aus jeweils einem an gegenüberliegenden Seiten des Vorsatzgerätes angeordneten Beleuchtungsmittel 221, 222 gebildete Stoppelbeleuchtung vorgesehen. Die Beleuchtungsmittel 221, 222 der Stoppelbeleuchtung sind an der Rückseite des Vorsatzgerätes 2, d.h. der der Erntemaschine 1 zugewandten Seite der Rückwand 29, angeordnet. Dadurch kann der Bediener mit ihnen das abgeerntete Stoppelbild überprüfen.

Die am Vorsatzgerät 2 angeordneten Beleuchtungsmittel 211, 212, 221, 222, 231, 232 ergänzen die an der selbstfahrenden Erntemaschine 1 angeordneten Beleuchtungsmittel. Bei starker Staubbelastung ist bei eingeschalteter Gutflussbeleuchtung 231, 232 eine Beobachtung des Gutflusses auf dem Förderband 261 möglich. Die Beleuchtungsmittel 211, 212 der Bestandskantenbeleuchtung ermöglicht zudem ein Ausleuchten der Bestandskante des Erntegutes auf dem Feld. Weiterhin ermöglichen die Beleuchtungsmittel 221, 222 der Stoppelbeleuchtung eine Beurteilung des Stoppelbildes während der Erntefahrt. Die Möglichkeit, die Beleuchtungsmittel 211, 212, 221, 222, 231, 232 des Vorsatzgerätes 2 von der Ferne aus, insbesondere von der Fahrerkabine 12 aus, ein- und auszuschalten, ermöglicht eine flexible Anpassung der Beleuchtung an die gerade vorherrschenden Sichtverhältnisse. Die Möglichkeit des Ein- und/oder Ausschaltens der Beleuchtungsmittel 211, 212, 221, 222, 231, 232 am Vorsatzgerät 2 selbst erhöht zudem den Komfort für den Bediener, insbesondere bei Wartungsarbeiten auf dem Feld.

### Bezugszeichenliste

- 1: Selbstfahrende Erntemaschine, Mähdrescher, Feldhäcksler
- 11: Einzugskanal
- 12: Fahrerkabine
- 13: Überladevorrichtung
- 101: In Fahrtrichtung linke Seite der selbstfahrenden Erntemaschine
- 102: In Fahrtrichtung rechte Seite der selbstfahrenden Erntemaschine
- 103: Heckseite
- 104: Frontseite
- 2: Vorsatzgerät, Schneckenvorsatzgerät, Draper- Vorsatzgerät
- 201: Linke Seite des Vorsatzgerätes
- 202: Rechte Seite des Vorsatzgerätes
- 203: Heckseite
- 204: Frontseite
- 210: Bestandskantenbeleuchtungskegel
- 211, 212: Linke / rechte Bestandskantenbeleuchtung
- 220: Stoppelbeleuchtungskegel
- 221, 222: Linke / rechte Stoppelbeleuchtung
- 230: Gutflussbeleuchtungskegel
- 231, 232: Linke / rechte Gutflussbeleuchtung
- 24: Mittenbereich
- 24': Seitenbereich
- 241: Durchlassöffnung
- 25: Schneidwerkzeuge
- 26: Bodenfläche
- 261: Förderband
- 27: Äußeres Ende
- 28: Schneidwerksmulde
- 29: Rückwand
- 3: Fahrtrichtung
- 4: Bediener
- 5: Netzwerk
- 50: Steuerungseinheit
- 51: Schalter
- 511: Erste Schaltstellung, Ausschaltstellung
- 512: Zweite Schaltstellung, Einschaltstellung
- 513: Dritte Schaltstellung, Kabinenschaltstellung
- 52: Bedienpanel
- 53: Lenkstockschalter
- 54: Sensor
- 55: Sensoreinrichtung
- 56: Bedieneinheit
- 61, 62: Fernlicht der selbstfahrenden Erntemaschine
- 63: Vorfeldbeleuchtung der selbstfahrenden Erntemaschine
- 64: Stoppelbeleuchtung, Gutflussbeleuchtung des Vorsatzgerätes
- 65: Rückwärtige Feldbeleuchtung
- 66, 67: Rückfahrleuchte der selbstfahrenden Erntemaschine
- 68: Rundumleuchte der selbstfahrenden Erntemaschine
- 71: Drehschalter
- 72, 73: auf- und ab Bewegung
- A: Abstand

## Patentansprüche

1. Anordnung aus einem Vorsatzgerät (2) und einer selbstfahrenden Erntemaschine (1), wobei das Vorsatzgerät (2) zum Ernten von Erntegut vorgesehen ist und einen Mittenbereich (24) aufweist, an dem es abnehmbar an einem Einzugskanal (11) der selbstfahrenden Erntemaschine (1) angeordnet ist, sowie benachbart zum Mittenbereich (24) angeordnete Seitenbereiche (24') aufweist, die jeweils eine sich im Wesentlichen in horizontaler Richtung erstreckende Bodenfläche (26) und eine sich im Wesentlichen in vertikaler Richtung erstreckende Rückwand (29) aufweisen, **dadurch gekennzeichnet, dass** an dem Vorsatzgerät (2) oberhalb der jeweiligen Bodenfläche (26) und unterhalb der Oberkante der Rückwand (29) Beleuchtungsmittel (231, 232) zum Beleuchten des Erntegutes während der Erntefahrt angeordnet sind, deren Lichtkegel (230) in Fahrtrichtung (3) gerichtet sind,
wobei die Beleuchtungsmittel (221, 222, 231, 232) in die Rückwand (29) integriert oder an der Rückwand (29) des jeweiligen Seitenbereiches (24') des Vorsatzgerätes (2) angeordnet sind,
wobei die Beleuchtungsmittel (231, 232) mit einem Abstand (A) zur Bodenfläche (26) angeordnet sind, wobei der Abstand geringer als 0,8 m, insbesondere geringer als 0,4 m, ist.

2. Anordnung nach Anspruch 1, **dadurch gekennzeichnet, dass** die Beleuchtungsmittel (231, 232) über die Vorderkante der Bodenfläche (26) hinaus einen Bereich vor dem Vorsatzgerät (2) auszuleuchten, insbesondere unterhalb einer sich im Erntebetrieb ausbildenden Staubzone.

3. Anordnung nach einem der Ansprüche 1 bis 2, **dadurch gekennzeichnet, dass** an dem Vorsatzgerät (2) jeweils ein weiteres Beleuchtungsmittel (211, 212) an gegenüberliegenden Enden der Seitenbereiche (24') angeordnet ist, wobei zur Ausrichtung eines Lichtkegels (210) des jeweiligen Beleuchtungsmittels (211, 212) eine sensorische Erfassung einer Bestandskante durch eine Sensoreinrichtung (55) vorgesehen ist.

4. Anordnung nach einem der vorangehenden Ansprüche, **dadurch gekennzeichnet, dass** auf der der Erntemaschine (1) zugewandten Seite der Rückwand (29) an der Rückwand (29) oder in die Rückwand (29) integriert zumindest zwei Beleuchtungsmittel (221, 222) angeordnet sind, deren Lichtkegel (220) entgegen der Fahrtrichtung (3) auf einen hinter dem Vorsatzgerät (2) liegenden Bereich ausgerichtet ist.

5. Anordnung nach einem der vorangehenden Ansprüche, **dadurch gekennzeichnet, dass** die an dem Vorsatzgerät (2) angeordneten Beleuchtungsmittel (211, 212, 221, 222, 231, 232), insbesondere funktionsweise, gemeinsam, separat und/oder paarweise, fernschaltbar, und/oder an einem zentralen Ort des Vorsatzgerätes (2) oder der selbstfahrenden Erntemaschine (1) gemeinsam ausschaltbar sind.

6. Anordnung nach einem der vorangehenden Ansprüche, **dadurch gekennzeichnet, dass** die Anordnung einen Schalter (51) mit zumindest zwei Schaltstellungen (511, 512, 513) umfasst, welche der Auswahl von zumindest zwei Beleuchtungsmodi dienen.

7. Anordnung nach Anspruch 6, **dadurch gekennzeichnet, dass** in einer ersten Schaltstellung (511) der Betrieb der Beleuchtungsmittel (211, 212, 221, 222, 231, 232) in einem ersten Betriebsmodus erfolgt, in welchem die Beleuchtungsmittel (211, 212, 221, 222, 231, 232) mittels einer zentralen Steuerungseinheit (50) ferngeschaltet individuell aus- und einschaltbar sind.

8. Anordnung nach Anspruch 6 oder 7, **dadurch gekennzeichnet, dass** in einer zweiten Schaltstellung (512) der Betrieb der Beleuchtungsmittel (211, 212, 221, 222, 231, 232) in einem zweiten Betriebsmodus erfolgt, in welchem die Beleuchtungsmittel (211, 212, 221, 222, 231, 232) am Vorsatzgerät (2) ausgeschaltet sind.

9. Anordnung nach Anspruch 6 bis 8, **dadurch gekennzeichnet, dass** in einer dritten Schaltstellung (513) der Betrieb der Beleuchtungsmittel (211, 212, 221, 222, 231, 232) in einem dritten Betriebsmodus erfolgt, in der die Beleuchtungsmittel (211, 212, 221, 222, 231, 232) am Vorsatzgerät (2) eingeschaltet sind.

10. Anordnung nach einem der Ansprüche 7 bis 9, **dadurch gekennzeichnet, dass** die zentrale Steuerungseinheit (50) eine Steuerungseinheit (50) der selbstfahrenden Erntemaschine (1) oder des Vorsatzgerätes (2) ist.

11. Anordnung nach einem der Ansprüche 7 bis 10, **dadurch gekennzeichnet, dass** die selbstfahrende Erntemaschine (1) eine verschwenkbare Überladevorrichtung (13) aufweist, und die zentrale Steuerungseinheit (50) dazu eingerichtet ist, dasjenige Beleuchtungsmittel (211, 212) automatisch beim Verschwenken der Überladevorrichtung (13) temporär zu deaktivieren, welches auf der Seite (101, 102) der ausgeschwenkten Überladevorrichtung (13) an dem Vorsatzgerät angeordnet ist.

12. Anordnung nach einem der vorhergehenden Ansprüche, **dadurch gekennzeichnet, dass** die selbstfahrende Erntemaschine (1) eine Fahrerkabine (12) aufweist, in der zumindest eine Bedieneinheit (56) zum gemeinsamen, separaten und/oder paarweisen Ein- und Ausschalten zumindest eines Teils der oder aller Beleuchtungsmittel (211, 221, 231, 212, 222, 232) des Vorsatzgerätes vorgesehen sind.

13. Anordnung nach einem der vorhergehenden Ansprüche, **dadurch gekennzeichnet, dass** die zumindest eine Bedieneinheit (56) als ein Kabinenschalter (53) und/oder ein Bedienpanel (52) ausgeführt ist.

## Claims

1. An arrangement comprising an attachment (2) and a self-propelled harvesting machine (1), wherein the attachment (2) is provided for harvesting crops and has a centre region (24) on which it is detachably arranged on an intake channel (11) of the self-propelled harvesting machine (1), and side regions (24') which are arranged adjacent to the central region (24) and which each have a base surface (26) extending substantially in the horizontal direction and a rear wall (29) extending substantially in the vertical direction, **characterised in in that** lighting means (231, 232) for illuminating the crop during the harvesting journey are arranged on the attachment (2) above the respective base surface (26) and below the upper edge of the rear wall (29), the light cones (230) of which lighting means are directed in the direction of travel (3),
wherein the lighting means (221, 222, 231, 232) are integrated into the rear wall (29) or are arranged on the rear wall (29) of the respective side region (24') of the front attachment (2),
the lighting means (231, 232) being arranged at a distance (A) from the base surface (26), the distance being less than 0.8 m, in particular less than 0.4 m.

2. Arrangement according to claim 1, **characterised in that** the lighting means (231, 232) illuminate an area in front of the front attachment (2) beyond the front edge of the base surface (26), in particular below a dust zone that forms during harvesting operation.

3. Arrangement according to one of claims 1 to 2, **characterised in that** a further illumination means (211, 212) is arranged on the attachment (2) at opposite ends of the side regions (24') in each case, a sensory detection of a stock edge by a sensor device (55) being provided for the alignment of a light cone (210) of the respective illumination means (211, 212).

4. Arrangement according to one of the preceding claims, **characterised in that** on the side of the rear wall (29) facing the self-propelled harvesting machine (1), at least two lighting means (221, 222) are arranged on the rear wall (29) or integrated into the rear wall (29), the light cone (220) of which is directed against the direction of travel (3) towards an area located behind the front attachment (2).

5. Arrangement according to one of the preceding claims, **characterised in that** the lighting means (211, 212, 221, 222, 231, 232) arranged on the attachment (2) can be switched off remotely, in particular functionally, together, separately and/or in pairs, and/or can be switched off together at a central location of the attachment (2) or the self-propelled harvesting machine (1).

6. Arrangement according to one of the preceding claims, **characterised in that** the arrangement comprises a switch (51) with at least two switch positions (511, 512, 513) which serve to select at least two lighting modes.

7. Arrangement according to claim 6, **characterised in that**, in a first switching position (511), the lighting means (211, 212, 221, 222, 231, 232) are operated in a first operating mode in which the lighting means (211, 212, 221, 222, 231, 232) can be switched on and off individually by remote control by means of a central control unit (50).

8. Arrangement according to claim 6 or 7, **characterised in that**, in a second switching position (512), the lighting means (211, 212, 221, 222, 231, 232) are operated in a second operating mode in which the lighting means (211, 212, 221, 222, 231, 232) on the attachment (2) are switched off.

9. Arrangement according to claims 6 to 8, **characterised in that**, in a third switching position (513), the lighting means (211, 212, 221, 222, 231, 232) are operated in a third operating mode in which the lighting means (211, 212, 221, 222, 231, 232) on the attachment device (2) are switched on.

10. Arrangement according to one of claims 7 to 9, **characterised in that** the central control unit (50) is a control unit (50) of the self-propelled harvester (1) or of the attachment (2).

11. Arrangement according to one of claims 7 to 10, **characterised in that** the self-propelled harvesting machine (1) has a pivotable overloading device (13), and the central control unit (50) is set up to temporarily deactivate automatically the lighting means (211, 212) which is arranged on the side (101, 102) of the pivoted-out overloading device (13) on the attachment when the overloading device (13) is pivoted out.

12. Arrangement according to one of the preceding claims, **characterised in that** the self-propelled harvester (1) has a driver's cab (12) in which at least one control unit (56) is provided for switching at least some or all of the lighting means (211, 221, 231, 212, 222, 232) of the attachment on and off together, separately and/or in pairs.

13. Arrangement according to one of the preceding claims, **characterised in that** the at least one operating unit (56) is designed as a cabin switch (53) and/or an operating panel (52).

## Revendications

1. Dispositif comprenant un outil frontal (2) et une récolteuse automotrice (1), l'outil frontal (2) étant prévu pour la récolte de végétaux à récolter et présentant une partie centrale (24) par laquelle il est monté de façon amovible sur un conduit d'alimentation (11) de la récolteuse automotrice (1), et présentant des parties latérales (24') qui sont disposées à proximité de la partie centrale (24) et comportent chacune une surface de plancher (26), s'étendant sensiblement dans la direction horizontale, et une paroi arrière (29) s'étendant sensiblement dans la direction verticale, **caractérisé en ce qu'**il est prévu sur l'outil frontal (2), au-dessus de la surface de plancher (26) respective et au-dessous du bord supérieur de la paroi arrière (29), des moyens d'éclairage (231, 232) destinés à éclairer les végétaux à récolter pendant le processus de récolte et dont les faisceaux lumineux (230) sont orientés dans le sens de déplacement (3),
les moyens d'éclairage (221, 222, 231, 232) étant intégrés dans la paroi arrière (29) ou étant disposés sur la paroi arrière (29) de la partie latérale respective de l'outil frontal (2),
les moyens d'éclairage (231, 232) étant disposés à une distance (A) par rapport à la surface de plancher (26), ladite distance étant inférieure à 0,8 m, notamment inférieure à 0,4 m.

2. Dispositif selon la revendication 1, **caractérisé en ce que** les moyens d'éclairage (231, 232) éclairent, au-delà du bord avant de la surface de plancher (26), une zone située devant l'outil frontal (2), notamment au-dessous d'une zone de poussières se formant au cours du processus de récolte.

3. Dispositif selon l'une des revendications 1 à 2, **caractérisé en ce qu'**un moyen d'éclairage (211, 212) supplémentaire est respectivement prévu à des extrémités opposées des parties latérales (24'), sachant que pour l'orientation d'un faisceau lumineux (210) du moyen d'éclairage (211, 212) respectif, il est prévu une détection par capteur d'une limite de culture, par un dispositif à capteur (55).

4. Dispositif selon l'une des revendications précédentes, **caractérisé en ce que** sur la face de la paroi arrière (29) tournée vers la récolteuse (1), au moins deux moyens d'éclairage (221, 222) sont disposés sur la paroi arrière (29) ou en étant intégrés dans la paroi arrière (29), dont le faisceau lumineux (220) est dirigé sur une zone située derrière l'outil frontal (2), dans le sens opposé au sens de déplacement (3).

5. Dispositif selon l'une des revendications précédentes, **caractérisé en ce que** les moyens d'éclairage (211, 212, 221, 222, 231, 232) disposés sur l'outil frontal (2) peuvent être commandés à distance, notamment sur le plan du fonctionnement, conjointement, séparément et/ou par paires, et/ou peuvent être coupés ensemble en un emplacement central de l'outil frontal (2) ou de la récolteuse automotrice (1).

6. Dispositif selon l'une des revendications précédentes, **caractérisé en ce que** le dispositif comprend un interrupteur (51) doté d'au moins deux positions de commutation (511, 512, 513) qui servent à sélectionner au moins deux modes d'éclairage.

7. Dispositif selon la revendication 6, **caractérisé en ce que** dans une première position de commutation (511), le fonctionnement des moyens d'éclairage (211, 212, 221, 222, 231, 232) s'effectue dans un premier mode de service dans lequel les moyens d'éclairage (211, 212, 221, 222, 231, 232) peuvent être commandés à distance pour être coupés et activés individuellement, à l'aide d'une unité de commande (50) centrale.

8. Dispositif selon la revendication 6 ou 7, **caractérisé en ce que** dans une deuxième position de commutation (512), le fonctionnement des moyens d'éclairage (211, 212, 221, 222, 231, 232) s'effectue dans un deuxième mode de service dans lequel les moyens d'éclairage (211, 212, 221, 222, 231, 232) de l'outil frontal (2) sont coupés.

9. Dispositif selon les revendications 6 à 8, **caractérisé en ce que** dans une troisième position de commutation (513), le fonctionnement des moyens d'éclairage (211, 212, 221, 222, 231, 232) s'effectue dans un troisième mode de service dans lequel les moyens d'éclairage (211, 212, 221, 222, 231, 232) de l'outil frontal (2) sont activés.

10. Dispositif selon l'une des revendications 7 à 9, **caractérisé en ce que** l'unité de commande (50) centrale est une unité de commande (50) de la récolteuse automotrice (1) ou de l'outil frontal (2).

11. Dispositif selon l'une des revendications 7 à 10, **caractérisé en ce que** la récolteuse automotrice (1) présente un dispositif de transbordement (13) pivotant, et l'unité de commande (50) centrale est conçue pour désactiver automatiquement et temporairement, lors du pivotement du dispositif de transbordement (13), le moyen d'éclairage (211, 212) qui est placé sur l'outil frontal, sur le côté (101, 102) du dispositif de transbordement (13) déployé.

12. Dispositif selon l'une des revendications précédentes, **caractérisé en ce que** la récolteuse automotrice (1) présente une cabine de conducteur (12) dans laquelle il est prévu au moins une unité de commande (56) destinée à l'activation et à la coupure communes, séparées et/ou par paires, d'au moins une partie ou de la totalité des moyens d'éclairage (211, 212, 221, 222, 231, 232).

13. Dispositif selon l'une des revendications précédentes, **caractérisé en ce que** l'unité de commande (56), au nombre d'au moins une, est réalisée sous forme d'interrupteur de cabine (53) et/ou de tableau de commande (52).
